# EUROPÄISCHE PATENTSCHRIFT

(11) **EP 1 992 862 B1**
(45) Veröffentlichungstag und Bekanntmachung des Hinweises auf die Patenterteilung: **28.07.2010**
(21) Anmeldenummer: 08154939.6
(22) Anmeldetag: 22.04.2008
(51) Int. Cl.: F16L 41/08, F16L 23/18

(54) **Anschlussarmatur, insbesondere für Höchstdruckschläuche**
Connecting fitting, in particular for high pressure hoses
Armature de fermeture, en particulier pour des tuyaux flexibles de haute pression

(30) Priorität: 05.05.2007 DE 202007006443 U
(43) Veröffentlichungstag der Anmeldung: 19.11.2008
(73) Patentinhaber: Dipl.-Ing. H. Schulz HDS Hydraulik GmbH & Co. KG, 51647 Gummersbach (DE)
(72) Erfinder: Siemens, Kornelius, 51647 Gummersbach (DE)
(74) Vertreter: Patentanwälte Dr. Solf & Zapf

(56) Entgegenhaltungen:
- EP-A- 0 899 496
- DE-A1- 3 834 066
- DE-U1-202004 005 911

## Beschreibung

Die vorliegende Erfindung betrifft eine Anschlussarmatur, insbesondere für Hoch- und Höchstdruckschläuche, bestehend aus einer Schlaucharmatur aus einem Rohrstutzen mit einendigem Anschlusskopf, insbesondere SAE-Kopf, sowie einem auf diesem gelagerten Vollflansch mit Durchgangslöchern, insbesondere entsprechend einem SAE-Lochbild, zum Durchstecken von Schraubbolzen, mit denen die Schlaucharmatur auf einem Anschlusskörper befestigbar ist.

Derartige Anschlussarmaturen werden z. B. zum Anschluss von Druckschläuchen an den Druckmittelausgang von Hochdruckpumpen verwendet. Am freien Ende des Rohrstutzens werden Abzweigkörper bzw. Verteiler aufgeschraubt, die zum Anschluss von Druckschläuchen und auch Dämpfungsschläuchen dienen.

Auf Grund dieser Bauart ergibt sich eine relativ große Bauhöhe oberhalb des Pumpengehäuses, so dass ein großer Bauraum erforderlich ist und zudem wird die Zugänglichkeit zum Pumpengehäuse erschwert. Weiterhin bedingen die vielen Anschlussstellen Druckverluste und durch die zahlreichen Dichtstellen ist das Leckagerisiko relativ groß.

Eine Anschlussarmatur der gattungsgemäßen Art ist aus der DE 38 34 066 A1 bekannt. Hierbei ist zwischen dem Vollflansch und dem Anschlusskörper eine hydraulische Baueinheit, z. B. ein Rückschlagventil befestigt. Die Schraubbolzen bilden die Eckpunkte eines gedachten Vierecks und die Baueinheit besitzt eine gegen Verschiebung gegenüber den Schraubbolzen sichernde Form. Diese Anschlussarmatur sieht keine weiteren Anschlüsse bzw. Abgänge an der Baueinheit vor und eine Justierung auch durch Verschiebung der Baueinheit während des Einschraubvorgangs ist nicht möglich, da dies die an die Anordnung der Schraubbolzen angepasste sichernde Formgebung verhindert.

Aus der DE 20 2004 911 U1 ist eine Fluidverteilvorrichtung bekannt, bei der der Rohrstutzen und der Vollflansch der Schlaucharmatur einteilig ausgebildet sind. Zwischen der Schlaucharmatur und dem Anschlusskörper ist ein Abzweigkörper angeordnet. Ein Anschluss von Rohrleitungen an den Abzweigkörper erfolgt mittels Anschlussstutzen, die umfangsgemäß abgedichtet in den Abzweigkörper eingesetzt sind. Damit diese Anschlussstutzen gegen Herausziehen gesichert sind, verlaufen die Schraubbolzen im montierten Zustand durch Ausnehmungen der Anschlussstutzen, so dass eine formschlüssige Verbindung hergestellt wird. Durch diese Ausbildung ist es nicht möglich, den Abzweigkörper während der Montage auszurichten, auch wird durch die einteilige Ausbildung der Schlaucharmatur durch deren Lochbild eine bestimmte Lage des Anschlusskopfes unveränderlich vorgegeben. Zudem besitzt die Fluidverteilvorrichtung eine Vielzahl von Dichtstellen.

Der vorliegenden Erfindung liegt die Aufgabe zu Grunde, die obigen Nachteile zu vermeiden und eine gattungsgemäße Armatur zu schaffen, die bei geringer Bauhöhe eine Justage auch während des Montagevorgangs und einen Anschluss von Abzweigungen mit geringen Druckverlusten unter Verringerung der Gefahr von Undichtigkeiten ermöglicht.

Erfindungsgemäß wird dies dadurch erreicht, dass zwischen dem Anschlusskopf und dem Anschlusskörper ein Abzweigkörper dichtend angeordnet ist, der eine Verbindungsbohrung zwischen dem Rohrstutzen und dem Anschlusskörper und mindestens eine von der Verbindungsbohrung abgehende Abzweigbohrung zu einem äusseren Anschluss aufweist, wobei die Durchgangslöcher mit den Schraubbolzen derart angeordnet sind, dass ein Abstand zum Abzweigkörper in montiertem Zustand eingehalten wird und die Abzweigbohrung in einem am Abzweigkörper ausgebildeten Flanschfortsatz verläuft.

Durch die Anordnung des Abzweigkörpers zwischen der Schlaucharmatur und dem Anschlusskörper des anzuschließenden Aggregats ergibt sich eine sehr kompakte Bauweise zwischen den anzuschließenden Schlauchleitungen und der Austrittsöffnung der Pumpe, so dass geringstmögliche Strömungsverluste entstehen, da keine Störstellen durch Anschlussstellen vorhanden sind. Auch können die anzuschließenden Schlauchleitungen unmittelbar oberhalb des Pumpengehäuses zugeführt werden, so dass eine gute Zugänglichkeit im Wartungsfalle in Bezug auf das Pumpengehäuse vorhanden ist. Zudem wird die Anzahl der Dichtstellen durch die erfindungsgemäße Ausbildung und damit die Gefahr von Leckage reduziert. Durch die Beabstandung des Abzweigkörpers von den Schraubbolzen ist auch noch während der Montage eine Ausrichtung des Abzweigkörpers möglich. Auch kann eine optimale Anpassung des Anschlusskopfes und des Abzweigkörpers zueinander erfolgen. Durch die Flanschfortsätze werden die Anschlussstellen für die anzuschließenden Leitungen nach außen gelegt, so dass eine gute Zugänglichkeit gegeben ist.

Weiterhin ist es zweckmäßig, wenn der Abzweigkörper eine an den Anschlusskopf an dessen Stirnfläche anliegende plane Kopffläche aufweist, wobei in der Stirnfläche des Anschlusskopfes eine dessen Austrittsöffnung umfassende Dichtung angeordnet ist. Weiterhin ist es vorteilhaft, wenn der Abzweigkörper eine an dem Anschlusskörper anliegende plane Bodenfläche aufweist, in der eine eine Eintrittsöffnung der Verbindungsbohrung umfassende Nut zur Aufnahme einer Dichtung ausgebildet ist. Diese Ausgestaltung ermöglicht eine sehr einfache Ausbildung der Dichtungsanordnung als O-Ring-Dichtung und ermöglicht eine große umfangsgemäße Auflage, so dass die auftretenden Anzugskräfte großflächig verteilt werden können, wobei ebenfalls durch die planen Anlagen ein Verkanten beim Anziehen verhindert wird.

Weiterhin ist es zweckmäßig, wenn an dem Grundkörper am Austrittsende der Abzweigbohrung bzw. der Abzweigbohrungen Schlauchnippel einstückig oder durch eine Lötverbindung angeordnet sind. Somit wird die Anzahl der erforderlichen Schraub- bzw. Dichtstellen weiter reduziert. Durch die mögliche Anlötung der Schlauchnippel können Schlauchnippel beliebiger Nennweite ohne Weiteres angeschlossen werden.

Vorteilhafte Ausführungen der Erfindung sind in den Unteransprüchen enthalten.

Anhand der in den beiliegenden Zeichnungen dargestellten Ausführungsbeispiele wird die Erfindung näher erläutert.

Es zeigen:
- Fig. 1: einen Längsschnitt durch eine erste Ausführungsform einer erfindungsgemäßen Anschlussarmatur,
- Fig. 2: eine Ansicht in Richtung des Pfeiles X in Fig. 1,
- Fig. 3: einen Längsschnitt durch eine weitere Ausführungsform einer erfindungsgemäßen Anschlussarmatur.

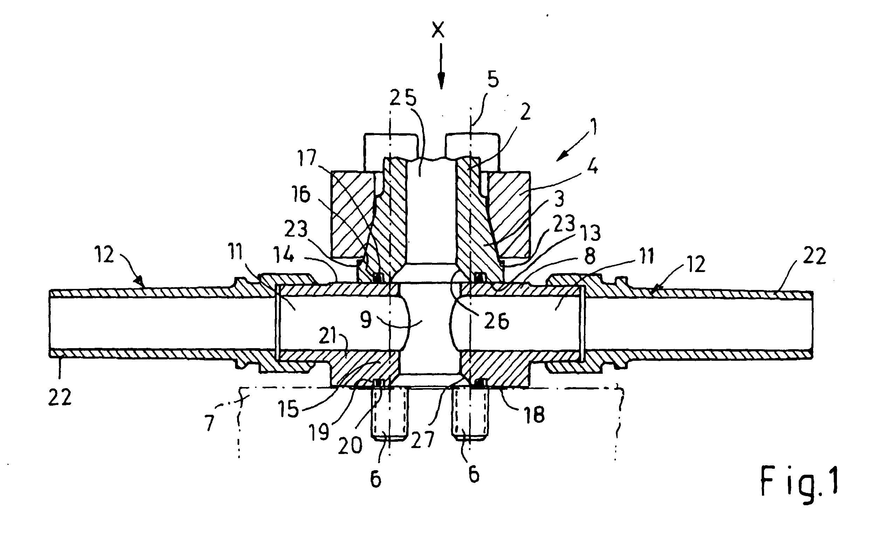

Wie aus Fig. 1 zu ersehen ist, besteht eine erfindungsgemäße Anschlussarmatur, insbesondere für Hochdruck- und Höchstdruckschläuche für Druckbereiche von beispielsweise bis zu 420 bar aus einer Schlaucharmatur 1, die aus einem Rohrstutzen 2 mit einem einendigen Anschlusskopf 3, insbesondere einem SAE-Kopf, sowie von einem auf diesem gelagerten Vollflansch 4 gebildet wird. Der Vollflansch 4 besitzt Durchgangslöcher 5, insbesondere entsprechend einem SAE-Lochbild, so dass im vorliegenden Fall vier Durchgangslöcher 5 vorhanden sind, die paarweise einander gegenüberliegend angeordnet sind.

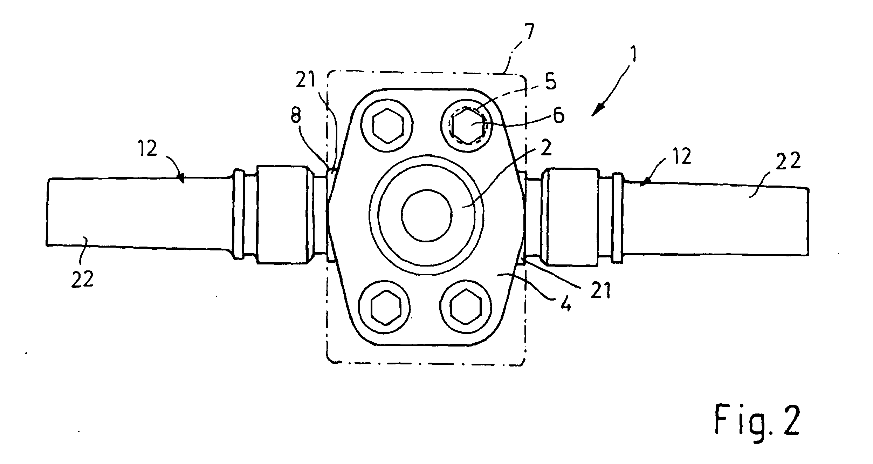

Wie in Fig. 1 durch Strich-Punkt-Linien dargestellt und in Fig. 2 in der Ansicht zu erkennen ist, werden durch die Durchgangslöcher 5 Schraubbolzen 6 hindurchgesteckt, mit denen die Schlaucharmatur 1 auf einem strichpunktiert dargestellten Anschlusskörper 7 eines Aggregates, beispielsweise einer Hochdruckpumpe, befestigbar ist. Zwischen dem Anschlusskopf 3 und dem Anschlusskörper 7 ist dichtend ein Abzweigkörper 8 angeordnet. Dieser Abzweigkörper 8 besitzt eine innere Verbindungsbohrung 9 zwischen dem Rohrstutzen 2 und dem Anschlusskörper 7 und weist weiterhin mindestens eine von dieser Verbindungsbohrung 9 ausgehende Abzweigbohrung 11 zu einem äusseren Anschluss 12 auf. Der Rohrstutzen 2 besitzt eine an den Abzweigkörper 8 an dessen Kopffläche 14 anliegende plane Stirnfläche 13. Hierbei ist in der Stirnfläche 13 seines Anschlusskopfes 3 eine dessen Austrittsöffnung umfassende Nut 16 mit einer Dichtung 17, insbesondere einer O-Ring-Dichtung, angeordnet. Weiterhin ist aus Fig. 1 zu entnehmen, dass der Abzweigkörper 8 eine an dem Anschlusskörper 7 anliegende plane Bodenfläche 18 besitzt, in der eine eine Eintrittsöffnung der Verbindungsbohrung 9 umfassende Nut 19 zur Aufnahme einer Dichtung 20, insbesondere eines O-Rings angeordnet ist. Der Abzweigkörper 8 besitzt eine oder mehrere, insbesondere zwei, Abzweigbohrungen 11. Im dargestellten Ausführungsbeispiel gemäß Fig. 1 sind zwei diametral gegenüberliegende gleichachsig verlaufende Abzweigbohrungen 11 ausgebildet. Hierbei verläuft die Verbindungsbohrung 9 in einem rechten Winkel zu den beiden Abzweigbohrungen 11. Der Abzweigkörper 8 besteht vorteilhafterweise aus einem die Verbindungsbohrung 9 konzentrisch umfassenden Grundkörper 15, insbesondere mit einer kreiszylinderförmigen Form, der Flanschfortsätze 21 mit den Abzweigbohrungen 11 aufweist. Die Schraubbolzen 6 sowie die Durchgangslöcher 5 sind derart angeordnet, dass zwischen den Schraubbolzen 6 und dem Grundkörper 15 ein Abstand eingehalten wird. Diese Formgebung und die Anordnung der Schraubbolzen 6 ermöglichen es, dass der Abzweigkörper 8 vor dem endgültigen Anziehen der Schraubbolzen 6 im Bereich zwischen den Schraubbolzen 6 durch Verdrehung durch die Schraubbolzen 6 ungehindert justiert werden kann, so dass die günstigste Anschlussstellung des Abzweigkörpers 8 eingestellt werden kann. Hierbei wird die Stellung des Grundkörpers 15 und ebenfalls des Rohrstutzens 2 nicht durch das Lochbild der Schlaucharmatur festgelegt. Indem in weiterer Ausgestaltung der Erfindung an dem Grundkörper 15 am Austrittsende der Abzweigbohrungen 11 der Flanschfortsätze 21 Schlauchnippel 22 einstückig oder durch eine Lötverbindung ausgebildet sind, wird die Anzahl der Dichtstellen reduziert, wodurch sich eine erhöhte Funktionssicherheit ergibt. Die angelöteten oder einstückig angeformten Schlauchnippel 22 können mit beliebiger Nennweite ausgeführt werden. Alternativ ist es erfindungsgemäß ebenso möglich, dass an den Grundkörper 19 am Austrittsende der Abzweigbohrungen 11 ein Außengewindestutzen zum Anschluss einer Dicht-Kegel-Armatur, einer sogenannten DKO-Armatur ausgebildet ist. Diese Ausführungsform ist nicht dargestellt.

Wie weiterhin aus Fig. 1 und 2 zu erkennen ist, ist die Schlaucharmatur 1 mit einem kegelstumpfförmigen Anschlusskopf 3 derart ausgebildet, dass dessen kleine Kegelstumpffläche einen Übergang zum Rohrstutzen 2 bildet und der Vollflansch 4 eine Durchgangsöffnung besitzt, die ein dem kegelstumpfförmigen Abschnitt des Anschlusskörpers 7 entsprechendes kegelstumpfförmiges Negativprofil aufweist. Hierbei handelt es sich um eine sogenannten SKE-Armatur. Bei der in Fig. 1 dargestellten erfindungsgemäß verwendeten Schlaucharmatur weist der Anschlusskopf 3 im Bereich der größeren Kegelstumpfendfläche eine Anzugsbegrenzung 23 für den Vollflansch 4 auf. Diese Anzugsbegrenzung 23 schließt sich unmittelbar an die größere Kegelstumpffläche an. Die Anzugsbegrenzung 23 wird aus einem Ringbund gebildet. In Bezug auf diese Ausführung wird im vollen Umfange auf das europäische Patent EP 0 899 496 verwiesen.

Der Rohrstutzen 2 weist eine Durchgangsbohrung 25 auf, die einen trichterförmig erweiterten Bohrungsabschnitt 26 besitzt, dessen Austrittsdurchmesser im Bereich der Stirnfläche 13 größer ist, als der Durchmesser der Verbindungsbohrung 9 im Abzweigkörper 8. Die Verbindungsbohrung 9 besitzt ebenfalls einen sich trichterförmig erweiternden Abschnitt 27 an ihrem dem Anschlusskörper 7 gegenüberliegenden Ende, dessen Durchmesser im Bereich der Kopffläche 14 größer ist als der Durchmesser einer Austrittsöffnung im Anschlusskörper 7.

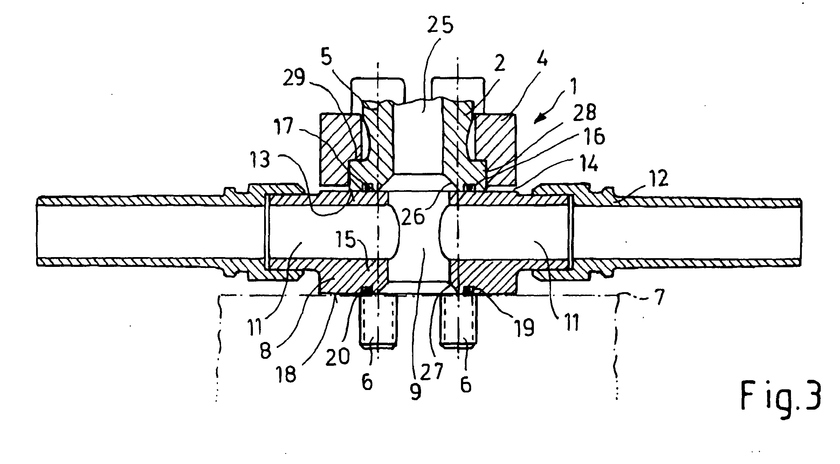

In Fig. 3 ist eine alternative Ausführungsform zu der Ausführung gemäß Fig. 1 dargestellt, wobei gleiche Teile wie in Fig. 1 mit denselben Bezugsziffern versehen sind. Hierbei ist der Anschlusskopf 3 als Flachkopf ausgebildet und weist einen Ringflansch 28 auf. Der Vollflansch 4 besitzt eine Durchgangsöffnung, die an den Ringflansch 28 angepasst ist, wobei in der Durchgangsöffnung eine Ringstufe 29 ausgebildet ist, mit der der Vollflansch 4 an dem Ringflansch 28 an dessen inneren Endfläche anliegt. Hierbei handelt es sich um eine sogenannte SAE-Flanscharmatur.

Der erfindungsgemäß verwendete Rohrstutzen 2 kann an seinem freien Ende einen grade ausgebildeten Schlauchnippel aufweisen, der einstückig angeformt oder aber angelötet sein kann. Alternativ kann es sich ebenfalls um einen bogenförmig ausgebildeten Schlauchnippel handeln.

In dem dargestellten Ausführungsbeispiel sind im Vollflansch 4 vier Durchgangslöcher dargestellt, so dass es sich um einen SAE-Flansch handelt. Es liegt aber ebenfalls im Rahmen der Erfindung, nur zwei symmetrisch angeordnete Durchgangslöcher vorzusehen, so dass der Vollflansch mit zwei Schraubbolzen befestigt werden kann. Hierbei ist es wesentlich, dass eine Ausbildung derart ist, dass kein Verkanten beim Anziehen erfolgt. Die Ausbildung des Vollflansches 4 und der Rohrstutzens 2 gemäß Fig. 1 hat den Vorteil, dass sich durch die inneren Konusflächen eine Selbstzentrierung beim Anziehen ergibt. Weiterhin liegt es ebenfalls im Rahmen der Erfindung, wenn der Rohrstutzen endseitig verschlossen ist, was beispielsweise mittels eines Stopfens oder dergleichen erreicht werden kann. Die erfindungsgemäße Ausbildung ermöglicht auch, dass mehrerem insbesondere zwei Abzeigkörper 8 übereinander angeordnet werden und mittels eines Anschlusskopfes 3 an dem Anschlusskörper 7 befestigt werden.

Die vorliegende Erfindung ist nicht auf die gezeigten Ausführungsbeispiele beschränkt, sondern umfasst alle im Sinne der in den Ansprüchen definierten Erfindung gleichwirkenden Mittel.

## Patentansprüche

1. Anschlussarmatur, insbesondere für Hochdruck- und Höchstdruckschläuche, bestehend aus einer Schlaucharmatur (1), aus einem Rohrstutzen (2) mit einendigem Anschlusskopf (3), insbesondere SAE-Kopf, sowie einem auf diesen gelagerten Vollflansch (4) mit Durchgangslöchern (5), insbesondere entsprechend einem SAE-Lochbild, zum Durchstecken von Schraubbolzen (6) mit denen die Schlaucharmatur (1) auf einen Anschlusskörper (7) befestigbar ist,
**gekennzeichnet durch** einen zwischen dem Anschlusskopf (3) und dem Anschlusskörper (7) dichtend anbringbaren Abzweigkörper (8), mit einer Verbindungsbohrung (9) und mit mindestens einer von dieser abgehenden Abzweigbohrung (11) zu einem äusseren Anschluss (12), wobei die Durchgangslöcher (5) mit den Schraubbolzen (6) derart angeordnet sind, dass ein Abstand zum Abzweigkörper (8) in montiertem Zustand eingehalten wird, und die Abzweigbohrung (11) in einem am Abzweigkörper (8) ausgebildeten Flanschfortsatz (21) verläuft.

2. Anschlussarmatur nach Anspruch 1,
**dadurch gekennzeichnet, dass** der Abzweigkörper (8) eine an den Anschlusskopf (3) an dessen Stirnfläche (13) anliegende plane Kopffläche (14) aufweist, wobei in der Stirnfläche (13) des Anschlusskopfes (3) eine dessen Austrittsöffnung umfassende Nut (16) zur Aufnahme einer Dichtung (17), insbesondere O-Ring-Dichtung, aufweist.

3. Anschlussarmatur nach Anspruch 1 oder 2,
**dadurch gekennzeichnet, dass** der Abzweigkörper (8) eine dem Anschlusskörper (7) gegenüberliegende und an diesem anliegende plane Bodenfläche (18) aufweist, in der eine eine Eintrittsöffnung der Verbindungsbohrung (9) umfassende Nut (19) zur Aufnahme einer Dichtung (20) angeordnet ist.

4. Anschlussarmatur nach einem der Ansprüche 1 bis 3,
**dadurch gekennzeichnet, dass** der Abzweigkörper (8) zwei Abzweigbohrungen (11) aufweist.

5. Anschlussarmatur nach Anspruch 4,
**dadurch gekennzeichnet, dass** die Abzweigbohrungen (11) einander gegenüberliegen und in einem rechten Winkel zur Verbindungsbohrung (9) verlaufen.

6. Anschlussarmatur nach einem der Ansprüche 1 bis 5,
**dadurch gekennzeichnet, dass** der Abzweigkörper (8) aus einem die Verbindungsbohrung (9) konzentrisch umfassenden Grundkörper (15), insbesondere kreiszylinderförmigen Grundkörper, besteht.

7. Anschlussarmatur nach einem der Ansprüche 1 bis 6,
**dadurch gekennzeichnet, dass** andemGrundkörper(15)am Austrittsende der Abzweigbohrungen (11) Schlauchnippel (22) einstückig oder durch eine Lötverbindung angeformt sind.

8. Anschlussarmatur nach einem der Ansprüche 1 bis 7,
**dadurch gekennzeichnet, dass** an dem Grundkörper (15) an dessen Flanschfortsätzen (21) am Austrittsende der Abzweigbohrungen (11) ein Außengewindestutzen zum Anschluss von Dicht-Kegelarmaturen (DKO-Armaturen) ausgebildet ist.

9. Anschlussarmatur nach einem der Ansprüche 1 bis 8,
**dadurch gekennzeichnet, dass** die Schlaucharmatur (1) einen kegelstumpfförmigen Anschlusskopf (3) besitzt, wobei dessen kleinere Kegelstumpffläche einen Übergang zum Rohrstutzen (2) bildet und der Vollflansch (4) eine Durchgangsöffnung besitzt, die ein dem kegelstumpfförmigen Abschnitt des Anschlusskopfes (3) entsprechendes kegelstumpfförmiges Negativprofil aufweist.

10. Anschlussarmatur nach Anspruch 9,
**dadurch gekennzeichnet, dass** der Anschlusskopf (3) im Bereich seiner größeren Kegelstumpfendfläche eine Anzugsbegrenzung (23) für den Vollflansch (4) aufweist, wobei sich die Anzugsbegrenzung (23) unmittelbar an die größere Kegelstumpfendfläche anschließt.

11. Anschlussarmatur nach einem der Ansprüche 1 bis 10,
**dadurch gekennzeichnet, dass** derAnschlusskopfals Flachkopf mit einem Ringflansch (28) ausgebildet ist, und der Vollflansch (4) mit einer Durchgangsöffnung ausgebildet ist, die an den Ringflansch (28) angepasst ist, wobei in dem Vollflansch (4) in seiner Durchgangsöffnung eine Ringstufe (29) ausgebildet ist, mit der der Vollflansch (4) an dem Ringflansch (28) an der dem Vollflansch (4) zugewandten Endfläche anliegt.

12. Anschlussarmatur nach einem der Ansprüche 1 bis 11,
**dadurch gekennzeichnet, dass** der Rohrstutzen (2) an seinem freien Ende einen Anschlussnippel aufweist, der gerade oder bogenförmig ausgebildet und der angelötet oder einstückig angeformt ist.

## Claims

1. A connection fitting, in particular for high pressure hoses and extreme pressure hoses, consisting of a hose fitting (1), of a pipe connection (2) with connection head (3) at one end, in particular a SAE head, as well as a solid flange (4) which is mounted thereon and which has through holes (5), in particular according to an SAE hole pattern, for the through passage of screw bolts (6) with which the hose fitting (1) is securable onto a connection body (7), **characterised by** a branch body (8), attachable in a sealing manner between the connection head (3) and the connection body (7), with a connecting bore (9) and with at least one branch bore (11), issuing from the latter, running to an outer connection (12), wherein the through holes (5) with the screw bolts (6) are arranged in such a manner that a distance from the branch body (8) is maintained in the assembled state, and the branch bore (11) runs in a flange extension (21) formed on the branch body (8).

2. A connection fitting according to claim 1, **characterised in that** the branch body (8) has a plane top surface (14) contacting the connection head (3) at the end face (13) of the latter, wherein the end face (13) of the connection head (3) has a groove (16), surrounding the outlet opening of the latter, to receive a seal (17), in particular an O-ring seal.

3. A connection fitting according to claim 1 or 2, **characterised in that** the branch body (8) has a plane bottom surface (18), facing the connection body (7) and resting thereagainst, in which there is arranged a groove (19), surrounding an inlet opening of the connecting bore (9), to receive a seal (20).

4. A connection fitting according to any one of claims 1 to 3, **characterised in that** the branch body (8) has two branch bores (11).

5. A connection fitting according to claim 4, **characterised in that** the branch bores (11) are opposite one another and run at a right angle to the connecting bore (9).

6. A connection fitting according to any one of claims 1 to 5, **characterised in that** the branch body (8) is composed of a base body (15), in particular a base body of circular-cylindrical shape, concentrically embracing the connecting bore (9).

7. A connection fitting according to any one of claims 1 to 6, **characterised in that** hose nipples (22) are formed, in an integral manner or by a soldered joint, on the basic body (15), at the outlet end of the branch bores (11).

8. A connection fitting according to any one of claims 1 to 7, **characterised in that** an externally threaded connecting piece for the connection of sealing cone fittings (DKO fittings) is formed on the flange extensions (21) of the basic body (15), at the outlet end of the branch bores (11).

9. A connection fitting according to any one of claims 1 to 8, **characterised in that** the hose fitting (1) has a truncated-cone-shaped connection head (3), wherein its smaller truncated-cone surface forms a transition to the pipe connection (2) and the solid flange (4) has a through opening having a truncated-cone-shaped negative profile which corresponds to the truncated-cone-shaped portion of the connection head (3).

10. A connection fitting according to claim 9, **characterised in that** in the region of its larger truncated-cone end surface, the connection head (3) has a tightening limit stop (23) for the solid flange (4), wherein the tightening limit stop (23) directly adjoins the larger truncated-cone end surface.

11. A connection fitting according to any one of claims 1 to 10, **characterised in that** the connection head is in the form of a flat head with an annular flange (28), and the solid flange (4) is formed with a through opening adapted to the annular flange (28), wherein an annular step (29) is formed in the through opening of the solid flange (4), the solid flange (4) resting against the annular flange (28), at the end surface facing the solid flange (4), by means of the annular step (29).

12. A connection fitting according to any one of claims 1 to 11, **characterised in that** the free end of the pipe connection (2) has a connection nipple which is straight or curved and is soldered thereon or formed thereon in an integral manner.

## Revendications

1. Accessoire de raccordement, en particulier pour des tuyaux souples pour haute et très haute pression, consistant en un raccord (1) pour tuyau souple constitué d'un embout (2) avec une tête de raccordement (3) à une extrémité, notamment une tête SAE, et d'une bride pleine (4) montée sur cette tête et dotée de trous débouchants (5), notamment selon un gabarit de trous SAE, pour faire passer des boulons filetés (6) par lesquels le raccord (1) pour tuyau souple peut être fixé sur un corps de raccordement (7),
**caractérisé par** un corps de dérivation (8) pouvant être monté en étanchéité entre la tête de raccordement (3) et le corps de raccordement (7) et pourvu d'un perçage de liaison (9) et d'au moins un perçage de dérivation (11) partant du précédent et menant à un branchement externe (12), les trous débouchants (5) munis des boulons filetés (6) étant disposés de telle sorte qu'une distance est maintenue par rapport au corps de dérivation (8) dans l'état monté, et le perçage de dérivation (11) s'étendant dans un prolongement formant bride (21) formé sur le corps de dérivation (8).

2. Accessoire de raccordement selon la revendication 1, **caractérisé en ce que** le corps de dérivation (8) présente une face de tête plane (14) s'appliquant contre la tête de raccordement (3) sur la face frontale (13) de celle-ci, une rainure (16) entourant l'ouverture de sortie de ce dernier et destinée à recevoir un joint d'étanchéité (17), notamment un joint torique, étant prévue dans la face frontale (13) de la tête de raccordement (3).

3. Accessoire de raccordement selon la revendication 1 ou 2, **caractérisé en ce que** le corps de dérivation (8) présente une face de fond plane (18) faisant face au corps de raccordement (7) et s'appliquant contre ce dernier, dans laquelle est disposée une rainure (19) entourant une ouverture d'entrée du perçage de liaison (9) et destinée à recevoir un joint d'étanchéité (20).

4. Accessoire de raccordement selon l'une des revendications 1 à 3, **caractérisé en ce que** le corps de dérivation (8) présente deux perçages de dérivation (11).

5. Accessoire de raccordement selon la revendication 4, **caractérisé en ce que** les perçages de dérivation (11) se font face et s'étendent sous un angle droit par rapport au perçage de liaison (9).

6. Accessoire de raccordement selon l'une des revendications 1 à 5, **caractérisé en ce que** le corps de dérivation (8) consiste en un corps de base (15), notamment un corps de base cylindrique circulaire, entourant concentriquement le perçage de liaison (9).

7. Accessoire de raccordement selon l'une des revendications 1 à 6, **caractérisé en ce que** des manchons de raccordement (22) pour tuyau souple sont formés d'un seul tenant ou par brasage sur le corps de base (15), à l'extrémité de sortie des perçages de dérivation (11).

8. Accessoire de raccordement selon l'une des revendications 1 à 7, **caractérisé en ce qu'**un embout à filetage extérieur, pour le raccordement de raccords bicônes (raccords DKO), est formé sur les prolongements formant brides (21) du corps de base (15), à l'extrémité de sortie des perçages de dérivation (11).

9. Accessoire de raccordement selon l'une des revendications 1 à 8, **caractérisé en ce que** le raccord (1) pour tuyau souple possède une tête de raccordement tronconique (3), sa plus petite face de cône tronqué formant une transition vers l'embout (2) et la bride pleine (4) possédant une ouverture débouchante qui présente un profil tronconique négatif correspondant à la partie tronconique de la tête de raccordement (3).

10. Accessoire de raccordement selon la revendication 9, **caractérisé en ce que** la tête de raccordement (3) présente, dans la région de sa plus grande face terminale de cône tronqué, une limitation de serrage (23) pour la bride pleine (4), la limitation de serrage (23) faisant directement suite à la plus grande face terminale de cône tronqué.

11. Accessoire de raccordement selon l'une des revendications 1 à 10, **caractérisé en ce que** la tête de raccordement est réalisée sous forme de tête plate avec une bride annulaire (28) et la bride pleine (4) est réalisée avec une ouverture débouchante qui est adaptée à la bride annulaire (28), un gradin annulaire (29) étant formé dans l'ouverture débouchante de la bride pleine (4), gradin par lequel la bride pleine (4) s'applique contre la face terminale de la bride annulaire (28) qui est tournée vers la bride pleine (4).

12. Accessoire de raccordement selon l'une des revendications 1 à 11, **caractérisé en ce que** l'embout (2) présente à son extrémité libre un manchon de raccordement qui est réalisé droit ou coudé et qui est brasé ou formé d'un seul tenant.
